# EUROPEAN PATENT SPECIFICATION

(11) **EP 4 067 412 B1**
(45) Date of publication and mention of the grant of the patent: **25.09.2024**
(21) Application number: 20891667.6
(22) Date of filing: 24.11.2020
(51) Int. Cl.: C08J 3/12, C08K 5/00, C08K 5/053, C08K 5/06, C08L 31/04, H01B 3/44, C08L 71/02, C09D 11/106

(54) **RESIN PELLETS, METHOD FOR PRODUCING RESIN PELLETS, GRAVURE INK, AND ELECTRIC WIRE COATING MATERIAL**
HARZPELLETS, VERFAHREN ZUR HERSTELLUNG VON HARZPELLETS, TIEFDRUCKFARBE UND ELEKTRISCHES DRAHTBESCHICHTUNGSMATERIAL
PASTILLES DE RÉSINE AINSI QUE PROCÉDÉ DE FABRICATION DE CELLES-CI, ENCRE D'HÉLIOGRAVURE, ET MATÉRIAU DE RECOUVREMENT DE FIL

(30) Priority: 28.11.2019 JP 2019215508
(43) Date of publication of application: 05.10.2022
(73) Proprietor: Dow-Mitsui Polychemicals Co., Ltd., Tokyo 104-0028 (JP)
(72) Inventor: ICHINOSEKI, Chikara, Ichihara-shi, Chiba 299-0108 (JP); SHIMIZU, Takahiro, Ichihara-shi, Chiba 299-0108 (JP); MOTONO, Keito, Ichihara-shi, Chiba 299-0108 (JP); NAKATA, Kazuyuki, Ichihara-shi, Chiba 299-0108 (JP)
(74) Representative: Gulde & Partner
(86) International application number: PCT/JP2020/043606
(87) International publication number: WO 2021/106846

(56) References cited:
- EP-A1- 1 757 624
- EP-A1- 2 351 637
- EP-A2- 1 752 432
- WO-A1-2020/196044
- JP-A- 2003 183 407
- JP-A- 2005 036 067
- JP-A- 2005 105 105
- JP-A- 2005 298 807
- JP-A- 2006 045 295
- JP-A- 2007 246 718
- JP-A- 2008 120 899
- JP-A- H0 673 187
- JP-A- H0 841 211

## Description

### Technical Field

The present disclosure relates to a resin pellet, a method of manufacturing a resin pellet, gravure ink and a wire coating material.

### Background Art

Ethylene-vinyl acetate copolymer (EVA), especially EVA with a high content of a constituent unit derived from vinyl acetate (VA), is used as a modifier for gravure ink because of its excellent adhesiveness. Examples of the organic solvents for gravure ink include various ones, and among them, toluene is inexpensive, has appropriate drying property at the time of printing, and has high solubility in resins, additives and the like. However, from the viewpoint of environmental friendliness in recent years, toluene-free use, which does not use toluene as the organic solvent used for gravure ink, has been spreading in various countries, and the conversion from toluene to ester solvents such as ethyl acetate has been progressing (for example, see Patent Document 1).

Herein, the solubility of EVA in the ester solvents is lower than that in toluene, and it is necessary to increase the content of the constituent unit derived from VA in EVA in order to secure high solubility of EVA. However, if the content of the constituent unit derived from VA is increased, the adhesiveness of EVA is also increased, and therefore there is a problem that blocking is likely to occur. In order to reduce the blocking, a method of adhering an antiblocking agent such as an inorganic filler or a fine particle polymer to the surface of the resin pellet has been proposed (see, for example, Patent Document 2). A method of adhering an aqueous emulsion including an ethylene-unsaturated ester copolymer and a surfactant to the surface of EVA to reduce the blocking has also been proposed (see, for example, Patent Document 3). As a pellet with improved blocking, an ethylene-based copolymer pellet obtained by blending (a): from 0.01 to 0.5 parts by weight of an unsaturated fatty acid bisamide having a melting point of from 100°C to 180°C, and (b): from 0.01 to 0.5 parts by weight of a lubricant that has a melting point of from 60°C to 90°C and lowers the melting point of (a) by 20°C or more when used in combination with (a), has been proposed (see, for example, Patent Document 4). Patent Document 5 relates to a process for providing water repellency and stain resistance to a masonry surface wherein an aqueous based water-repellent polymeric coating is applied thereto and the water removed leaving a water repellent polymeric film adhered to the masonry surface. The coating contains an aqueous emulsion of a semi crystalline ethylene-vinyl acetate polymer formed by emulsion polymerization. Patent Document 6 discloses a poly(vinyl acetate) emulsion obtained as seed polymerization product of a monomer component comprising at least vinyl acetate, the seed polymerization is carried out in an ethylene-vinyl acetate copolymer emulsion, in which the ethylene-vinyl acetate copolymer emulsion has been prepared by using a dispersing agent and the dispersing agent comprises a vinyl alcohol polymer. Patent Document 7 describes a method for producing a resin film or a resin sheet comprising a step of cleaning resin pellets and a step of forming the resin film or the resin sheet by using the cleaned resin pellets. Patent Document 8 relates to a flame retardant resin composition having an ethylene copolymer as a base resin.
[Patent Document 1] JP 2006-131843 A
[Patent Document 2] JP 2012-40719 A
[Patent Document 3] JP 2014-189617 A
[Patent Document 4] JP 2004-256740 A
[Patent Document 5] EP 1 752 432 A2
[Patent Document 6] EP 1 757 624 A1
[Patent Document 7] EP 2 351 637 A1
[Patent Document 8] JP 2005-298807 A

### SUMMARY OF INVENTION

### Technical Problem

In the method of reducing the blocking by adhering a large amount of the inorganic filler, the fine particle polymer, or the like to the surface of the resin pellet as in Patent Document 2, the blocking can be reduced, but since the inorganic filler is include, the solubility of the resin pellet is insufficient when the resin pellet is dissolved in a solvent, the solution becomes turbid, and a highly transparent ink may not be obtained. On the other hand, even in the method of adhering the aqueous emulsion including the ethylene-unsaturated ester copolymer and the surfactant to the surface of EVA to reduce the blocking as in Patent Document 3, when the ethylene-based polymer is dissolved in a solvent, the solubility is insufficient and the solution becomes turbid, and a highly transparent ink may not be obtained. Further, in Patent Document 4, when the blending amount of the unsaturated fatty acid bisamide and the lubricant exceeds 0.5 parts by weight, a large amount of the lubricant bleeds on the surface over time, and thereby causing problems such as deterioration of adhesiveness. Therefore, when the VA content of EVA increases and the need of reducing the blocking increases, the blending amount of the unsaturated fatty acid bisamide and the lubricant that contribute to the blocking reducing effect cannot be increased, and the adhesion amount of the unsaturated fatty acid bisamide and the lubricant to EVA cannot be increased. Thus there is room for improvement in reducing the blocking.

An object of the present disclosure is to provide a resin pellet in which the blocking is reduced, a method of manufacturing thereof, and gravure ink and a coating material that include the resin pellet.

### Solution to Problem

Means for solving the above problems include the following aspects.

According to a first aspect of the present invention, a resin pellet is provided, including: a pellet-shaped ethylene-vinyl acetate copolymer; a liquid coating agent; and a solid coating agent adhered to at least a portion of surfaces of the ethylene-vinyl acetate copolymer and of the liquid coating agent, wherein the liquid coating agent is a compound including a hydroxyl group, and the liquid coating agent includes at least one liquid coating agent selected from the group consisting of a polyalkylene oxide, a block copolymer with an ethylene oxide chain and a propylene oxide chain, a random copolymer with an ethylene oxide chain and a propylene oxide chain, glycerin, diglycerin, and a silicone oil, and wherein the solid coating agent is an organic compound including an amide of a saturated fatty acid or an unsaturated fatty acid.

In some embodiments, a total adhesion amount of the solid coating agent is 1.0 parts by mass or more with respect to 100 parts by mass of the ethylene-vinyl acetate copolymer.

In some embodiments, a number obtained by dividing a surface adhesion amount, in parts by mass, of the solid coating agent with respect to 100 parts by mass of the ethylene-vinyl acetate copolymer by a total adhesion amount, in parts by mass, of the solid coating agent with respect to 100 parts by mass of the ethylene-vinyl acetate copolymer is from 0.80 to 1.00.

In some embodiments, the solid coating agent is adhered to at least a portion of the surface of the ethylene-vinyl acetate copolymer via the liquid coating agent.

In some embodiments, a number obtained by dividing a total adhesion amount, in parts by mass, of the solid coating agent with respect to 100 parts by mass of the ethylene-vinyl acetate copolymer by a number, number/g, of the ethylene-vinyl acetate copolymer per 1 g of the ethylene-vinyl acetate copolymer is 0.037 or more.

In some embodiments, a content of a constituent unit derived from vinyl acetate in the ethylene-vinyl acetate copolymer, is from more than 40% by mass to 70% by mass.

In some embodiments, the organic compound includes an unsaturated fatty acid amide.

In some embodiments, the organic compound includes an unsaturated fatty acid monoamide.

In some embodiments, the liquid coating agent includes at least one selected from the group consisting of a block copolymer with an ethylene oxide chain and a propylene oxide chain, a random copolymer with an ethylene oxide chain and a propylene oxide chain, and diglycerin.

According to a second aspect of the present invention a method of manufacturing the resin pellet according to the first aspect is provided, the method comprising: a step of adhering the liquid coating agent to at least a portion of the surface of the ethylene-vinyl acetate copolymer, and a step of adhering the solid coating agent to at least a portion of the surface of the ethylene-vinyl acetate copolymer.

In some embodiments, the step of adhering of the liquid coating agent and the step of attaching the solid coating agent are performed by contacting the ethylene-vinyl acetate copolymer with an aqueous solution in which the liquid coating agent is dissolved and in which the solid coating agent is dispersed.

In some embodiments the aqueous solution in which the liquid coating agent is dissolved and in which the solid coating agent is dispersed is an emulsion.

According to a further aspect of the present invention, a gravure ink is provided, including the resin pellet according to the embodiments.

According to another aspect of the present invention, a wire coating material is provided, including the resin pellet according to the embodiments.

### Advantageous Effects of Invention

According to the present disclosure, a resin pellet in which the blocking is reduced, a method of manufacturing thereof, and gravure ink and a coating material that include the resin pellet can be provided.

### DESCRIPTION OF EMBODIMENTS

In the present disclosure, a numerical range specified by way of using the expression "(from) ... to ..." includes the numerical values before and after the word "to" as the lower limit value and the upper limit value.

In the present disclosure, when plural substances corresponding to each component are present in a composition, the amount of each component means the total amount of the plural substances unless otherwise specified.

In the numerical ranges described in a stepwise manner in the present disclosure, the upper limit value or the lower limit value described in one numerical range may be replaced with the upper limit value or the lower limit value of another numerical range described in a stepwise manner, or may be replaced with the values shown in the Examples.

In the present disclosure, an addition amount of a coating agent means a part by mass of the added coating agent with respect to 100 parts by mass of an ethylene-vinyl acetate copolymer.

In the present disclosure, a total adhesion amount means a total of a part by mass of the coating agent existing on a surface of the ethylene-vinyl acetate copolymer and inside the ethylene-vinyl acetate copolymer with respect to 100 parts by mass of the ethylene-vinyl acetate copolymer.

In the present disclosure, a surface adhesion amount of the coating agent means a parts by mass of the coating agent existing on the surface of the ethylene-vinyl acetate copolymer with respect to 100 parts by mass of the ethylene-vinyl acetate copolymer.

### [Resin pellet]

A resin pellet in the present disclosure includes a pellet-shaped ethylene-vinyl acetate copolymer (hereinafter, also referred to as "EVA"), a liquid coating agent, and a solid coating agent adhered to at least a portion of surfaces of the ethylene-vinyl acetate copolymer and of the liquid coating agent, in which the liquid coating agent is a compound including a hydroxyl group, and the solid coating agent is an organic compound. The total adhesion amount of the solid coating agent is preferably 1.0 parts by mass or more with respect to 100 parts by mass of the pellet-shaped EVA.

In the resin pellet of the present disclosure, the solid coating agent is preferably adhered to at least a portion of the surface of EVA via the liquid coating agent, from the point of reducing the blocking, the total adhesion amount of the solid coating agent is preferably 1.0 parts by mass or more with respect to 100 parts by mass of EVA.

### (Ethylene-vinyl acetate copolymer)

The resin pellet of the present disclosure includes the pellet-shaped ethylene-vinyl acetate copolymer (EVA), and the solid coating agent is adhered to at least a portion of the surfaces of EVA and of the liquid coating agent. The pellet-shaped resin is useful from the viewpoints of ease of removal from the storage location, ease of supply to a molding apparatus, ease of transport, ease of weighing, and the like.

EVA is a polymer obtained by copolymerizing ethylene and vinyl acetate.

The content of a constituent unit derived from vinyl acetate included in EVA is preferably from more than 40% by mass to 70% by mass. For example, from the viewpoint of excellent solubility in ester solvents, the aforementioned content is preferably 41% by mass or more, more preferably 42% by mass or more, still more preferably 45% by mass or more. From the viewpoint of reducing the blocking of the resin pellet, the aforementioned content is preferably 65% by mass or less, more preferably 60% by mass or less, still more preferably 50% by mass or less, particularly preferably 49% by mass or less, and extremely preferably 47% by mass or less.

The meltmass-flow rate (MFR; JIS K7210:1999, 190°C and a load of 2160 g) is preferably from 0.1 g/10 min to 300 g/10 min, more preferably from 10 g/10 min to 200 g/10 min, and still more preferably from 50 g/10 min to 150 g/10 min.

A method of manufacturing EVA is not particularly limited, and EVA can be manufactured by a known method. For example, EVA can be obtained by copolymerization of each polymerizable component under high temperature and high pressure, radical copolymerization of each polymerizable component under middle pressure, or the like.

The ratio of the pellet-shaped EVA in the resin pellet of the resin pellet is preferably from 80% by mass to less than 99% by mass, and more preferably from 85% by mass to 98% by mass.

The shape of the pellet-shaped EVA is not particularly limited, and examples thereof include a spherical shape, an elliptical spherical shape, a columnar shape, an elliptical columnar shape, a square shape, a rod shape, and an arbitrary combination of these shapes. As the size of the pellet-shaped EVA, the width and the length are each independently preferably from 0.5 mm to 12mm, and more preferably from 1 mm to 7 mm.

The number of the pellet-shaped EVA per 1 g of the resin pellet of the present disclosure is preferably from 1 number/g to 100 number/g, more preferably from 30 number/g to 70 number/g, and still more preferably from 40 number/g to 60 number/g, from the viewpoint of productivity.

### (liquid coating agent)

The resin pellet of the present disclosure includes a liquid coating agent being a compound including a hydroxyl group and includes at least one liquid coating agent selected from the group consisting of a polyalkylene oxide, a block copolymer with an ethylene oxide chain and a propylene oxide chain, a random copolymer with an ethylene oxide chain and a propylene oxide chain, glycerin, diglycerin, and a silicone oil. The liquid coating agent has a function of adhering a solid coating agent on at least a portion of the surface of EVA, and the liquid coating agent may be adhered to the surface of EVA or may be included inside EVA.

In the present disclosure, the liquid coating agent means a coating agent that is liquid at 25°C. The liquid coating agent is preferably a compound including a hydroxyl group with the viscosity at 25°C of 100 mPa s or more.

In the present disclosure, the viscosity at 25°C is a value measured using a B-type viscometer.

The lower limit of the viscosity of the liquid coating agent at 25°C is preferably 100 mPa s or more, more preferably 300 mPa s or more, and still more preferably 600 mPa s or more. The upper limite of the viscosity of the liquid coating agent at 25°C is preferably 20000 mPa·s or less, more preferably 15000 mPa s or less, and still more preferably 13000 mPa s or less.

According to the present invention, he liquid coating agent includes at least one specific liquid coating agent selected from the group consisting of a polyalkylene oxide (for example, polyethylene glycol, and polypropylene glycol), a block copolymer with an ethylene oxide chain and a propylene oxide chain, a random copolymer with an ethylene oxide chain and a propylene oxide chain, glycerin, diglycerin, and a silicone oil. From the viewpoint of excellent solubility in water and ester solvent, the specific liquid coating agent preferably includes at least one selected from the group consisting of the aforementioned copolymer, glycerin, diglycerin, and a silicone oil, more preferably includes at least one selected from the group consisting of the aforementioned copolymer, diglycerin, and silicone oil, still more preferably includes at least one selected from the group consisting of the aforementioned copolymer and diglycerin, and particularly preferably includes the aforementioned copolymer.

The liquid coating agent may include or may not include another liquid coating agent other than the specific liquid coating agent.

The content of the specific liquid coating agent in the liquid coating agent is preferably from 60% by mass to 100% by mass, more preferably from 80% by mass to 100% by mass, and still more preferably from 90% by mass to 100% by mass.

In a case in which the liquid coating agent includes the block copolymer with an ethylene oxide chain and a propylene oxide chain, or the random copolymer with an ethylene oxide chain and a propylene oxide chain, the viscosity of the compound at 25°C is preferably from 100 mPa·s to 20000 mPa·s, more preferably from 300 mPa s to 15000 mPa·s, and still more preferably from 600 mPa·s to 13000 mPa·s.

In a case in which the liquid coating agent includes the block copolymer with an ethylene oxide chain and a propylene oxide chain, or the random copolymer with an ethylene oxide chain and a propylene oxide chain, the block copolymer with a polyethylene oxide chain and a polypropylene oxide chain is preferable, a triblock copolymer with a polyethylene oxide chain and a polypropylene oxide chain is more preferable, and a triblock copolymer with a polyethylene oxide chain, a polypropylene oxide chain, and a polyethylene oxide chain in this order is still more preferable.

In a case in which the liquid coating agent includes the block copolymer with an ethylene oxide chain and a propylene oxide chain, or the random copolymer with an ethylene oxide chain and a propylene oxide chain, the content of the ethylene oxide chain in the liquid coating agent is preferably from 20% by mass to 50% by mass, more preferably from 25% by mass to 45% by mass, and still more preferably from 35% by mass to 45% by mass, with respect to the total. The content of the propylene oxide chain in the liquid coating agent is preferably from 50% by mass to 80% by mass, more preferably from 55% by mass to 75% by mass, and still more preferably from 55% by mass to 65% by mass, with respect to the total.

In a case in which the liquid coating agent includes the silicone oil, a modified silicone oil in which an organic group has been introduced into a portion of methyl groups in dimethylpolysiloxane is preferable, and a polyether modified silicone oil in which the introduced organic group is a polyether group is more preferable.

Examples of the polyether modified silicone oils include BYK-306, BYK-307, BYK-333, BYK-341, BYK-345, BYK-346, BYK-348 (trade name, manufactured by BYK), KF-351A, KF-352A, KF-353, KF -354L, KF-355A, KF-615A, KF-945, KF-640, KF-642, KF-643, KF-6020, KF-6204, X-22-4515, KF-6011, KF-6012, KF -6015, and KF-6017 (trade name, manufactured by Shin-Etsu Chemical Co., Ltd.).

The total adhesion amount of the liquid coating agent is preferably from 0.001 parts by mass to 3.0 parts by mass, and more preferably from 0.01 parts by mass to 0.30 parts by mass, with respect to 100 parts by mass of the pellet-shaped EVA.

### (Solid coating agent)

The resin agent of the present disclosure includes the solid coating agent adhered to at least a portion of surfaces of EVA and of the liquid coating agent. According to the present invention, the solid coating agent is an organic compound and the organic compound includes an amide of a saturated fatty acid or an unsaturated fatty acid. The total adhesion amount is preferably 1.0 parts by mass or more with respect to 100 parts by mass of the pellet-shaped EVA.

In the present disclosure, the solid coating agent means a coating agent that is solid at 40°C.

The organic compound includes an amide of a saturated fatty acid or an unsaturated fatty acid, from the viewpoint of solubility in ester solvents, preferably includes the unsaturated fatty acid amide such as an unsaturated fatty acid monoamide or an unsaturated fatty acid bisamide, and more preferably includes the unsaturated fatty acid monoamide. The total adhesion amount of the unsaturated fatty acid monoamide may be 1.0 parts by mass or more with respect to 100 parts by mass of the pellet-shaped EVA, the total adhesion amount of the unsaturated fatty acid bisamide may be 1.0 parts by mass or more with respect to 100 parts by mass of the pellet-shaped EVA, or the total adhesion amount of the unsaturated fatty acid monoamide and the unsaturated fatty acid bisamide may be 1.0 parts by mass or more with respect to 100 parts by mass of the pellet-shaped EVA.

The organic compound may include or may not include another organic compound other than the amide of the saturated fatty acid or the unsaturated fatty acid.

The content of the amide of the saturated fatty acid or the unsaturated fatty acid in the solid coating agent is preferably from 60% by mass to 100% by mass, more preferably from 80% by mass to 100% by mass, and still more preferably from 90% by mass to 100% by mass.

Examples of the amide of the saturated fatty acid or the unsaturated fatty acid include a saturated fatty acid monoamide, an unsaturated fatty acid monoamide, a substituted amide, a methylolamide, a saturated fatty acid bisamide, an unsaturated fatty acid bisamide, a fatty acid ester amide, and an aromatic bisamide.

Examples of the saturated fatty acid monoamide include lauric acid amide, palmitic acid amide, stearic acid amide, behenic acid amide, and hydroxystearic acid amide.

Examples of the unsaturated fatty acid monoamide include oleic acid amide, and erucic acid amide.

Examples of the substituted amide include N-oleyl palmitic acid amide, N-stearyl stearic acid amide, N-stearyl oleic acid amide, N-oleyl stealic acid amide, and N-stearyl erucic acid amide.

Examples of the methylol amide include methylol stearic acid amide.

Examples of the saturated fatty acid bisamide include methylene bisstearic acid amide, ethylene biscapric acid amide, ethylene bislauric acid amide, ethylene bisstearic acid amide, ethylene bishydroxystearic acid amide, ethylene bisbechenic acid amide, hexamethylene bisstearic acid amide, hexamethylene bisbechenic acid amide, hexamethylene hydroxystearic acid amide, N, N'-distealyl adipic acid amide, and N, N'-distearyl sebacic acid amide.

Examples of the unsaturated fatty acid bisamide include ethylene bisoleic acid amide, ethylene biserucic acid amide, hexamethylene bisoleic acid amide, N, N'-dioleyl adipic acid amide, and N, N'-dioleyl sebacic acid amide.

Examples of the fatty acid ester amide include stearamide ethyl stearate.

Examples of the aromatic bisamide include m-xylylene bisstearic acid amide, m-xylylene bishydroxystearic acid amide, and N, N'-distearylisophthalic acid amide.

As the amides of the saturated fatty acid or the unsaturated fatty acid, one kind may be used alone, or two or more kinds may be used in combination.

The total adhesion of the solid coating agent is preferably 1.0 parts by mass or more, from the viewpoint of reducing the blocking of the resin pellet, more preferably 1.1 parts by mass or more, still more preferably 1.9 parts by mass or more, and particularly preferably 2.0 parts by mass or more, with respect to 100 parts by mass of the pellet-shaped EVA. From the viewpoint of solubility in ester solvents, the total adhesion of the solid coating agent is preferably 10 parts by mass or less, and more preferably 5 parts by mass or less, with respect to 100 parts by mass of the pellet-shaped EVA.

From the viewpoint of reducing the blocking of the resin pellet, the number obtained by dividing the total adhesion amount (in parts by mass) of the solid coating agent with respect to 100 parts by mass of EVA by the number (number/g) of EVA per 1 g of EVA is preferably 0.020 or more, and more preferably 0,037 or more. The aforementioned value is preferably 0.450 or less, and more preferably 0.300 or less.

From the viewpoint of reducing the blocking of the resin pellet, the number obtained by dividing the surface adhesion amount (in parts by mass) of the solid coating agent with respect to 100 parts by mass of EVA by the total adhesion amount (in parts by mass) of the solid coating agent with respect to 100 parts by mass of EVA is preferably from 0.80 to 1.00 and more preferably from 0.85 to 1.00.

For example, in a case in which the number of EVA per 1g of EVA is small, when the total surface area of EVA becomes smaller when compared with the same mass as in a case in which the number of EVA per 1 g of EVA is large. In a case in which the number of EVA per 1g of EVA is small and the total surface area is small, each of the aforementioned values corresponds to what the excellent blocking reducing effect of the resin pellet can be obtained even when the total adhesion amount or the surface adhesion amount of the solid coating agent is relatively small.

In a case in which the number of EVA per 1g of EVA is large, when the total surface area of EVA becomes larger when compared with the same mass as in a case in which the number of EVA per 1 g of EVA is small. In a case in which the number of EVA per 1g of EVA is large and the total surface area is large, each of the aforementioned values corresponds to what the excellent blocking reducing effect of the resin pellet can be obtained even when the total adhesion amount or the surface adhesion amount of the solid coating agent is relatively large.

### (Other components)

The resin pellet of the present disclosure may include another component as necessary. Examples of other components include pigments, dyes, antioxidants, lubricants, weathering agents, antiblocking agents other than the aforementioned solid coating agent, heat stabilizers, UV stabilizers, flame retardants, and flame retardant aids.

The resin pellet of the present disclosure may or may not include another component other than the pellet-shaped ethylene-vinyl acetate copolymer, the liquid coating agent or the solid coating agent. For example, the resin pellet of the present disclosure may include an inorganic filler to the extent that the effect of the present invention is exhibited. From the viewpoint of obtaining highly transparent gravure ink, it is preferable that the resin pellet of the present disclosure does not include the inorganic filler.

Examples of the inorganic filler is not particularly limited and examples thereof include a glass fiber, a carbon fiber, silica, alumina, calcium carbonate, silicon carbide, zirconium silicate, calcium silicate, silicon nitride, aluminum nitride, boron nitride, beryllia, zirconia, zircone, forsterite, steatite, spinel, mulite, titania , clay, mica, aluminum hydroxide, magnesium hydroxide, calcium hydroxide, and a hydrous silicate.

### [Method of manufacturing resin pellet]

Hereinafter, an aspect of the method of manufacturing the resin pellet to manufacture the aforementioned resin pellet of the present disclosure will be explained. The method of manufacturing the resin pellet is a method to manufacture the aforementioned resin pellet of the present disclosure, and the method includes a step of adhering the liquid coating agent to at least a portion of the surface of EVA, and a step of adhering the solid coating agent to at least a portion of the surface of EVA. As a result, the resin pellet adhering the liquid coating agent and the solid coating agent to at least a portion of the surface of EVA is obtained.

For example, the step of adhering the liquid coating agent may be performed by spraying an aqueous solution including the liquid coating agent to at least a portion of the surface of EVA, or may be performed by immersing EVA in the aqueous solution including the liquid coating agent. For example, the concentration of the liquid coating agent in the aqueous solution may correspond to what 0.1 g to 5.0 g of the liquid coating agent is mixed with water to prepare 50 mL of the liquid mixture, or may correspond to what 0.1 g to 3.0 g of the liquid coating agent is mixed with water to prepare 50 mL of the liquid mixture.

For example, the step of adhering the solid coating agent may be performed by spraying water with the solid coating agent dispersed or an aqueous solution including the solid coating agent to at least a portion of the surface of EVA, may be performed by contacting (for example, immersing) EVA in the water with the solid coating agent dispersed or the aqueous solution, or may be performed by directly contacting the solid coating agent to EVA. The addition amount of the solid coating agent may be from 1.0 parts by mass to 20 parts by mass, or may be from 2.0 parts by mass to 15 parts by mass, with respect to 100 parts by mass of EVA in which the solid coating agent is adhered.

From the viewpoint of improving the effect of reducing the blocking, the average particle size of the solid coating agent is 50 µm or less, more preferably 40 µm or less, and still more preferably 30 µm or less. From the viewpoint of handleability of the solid coating agent, the average particle size of the solid coating agent is 0.05 µm or more, more preferably 0.1 µm or more, and still more preferably 0.2 µm or more.

The average particle size of the solid coating agent can be measured with a laser diffraction type particle size distribution measuring device. Herein, the average particle size means an average particle size having a cumulative volume of 50%.

### [Method of measuring average particle size]

The average particle size of the solid coating agent is a value measured under the following conditions using, for example, "LA-950" manufactured by HORIBA, Ltd., which is a laser diffraction type particle size distribution measuring device.
- Measurement method: Wet method
- Dispersion medium: n-hexane
- Dispersion method: Ultrasonic wave

The shape of the solid coating agent is not particularly limited, and examples thereof include powdered, powdery, granular, pellet, flaky, lump, scaly, rodlike, filmy, sheet, fibrous and any combination of these shapes.

The step of adhering the liquid coating agent and the step of adhering the solid coating agent may be performed separately in random order, or may be performed in parallel. From the viewpoint of workability, the step of adhering the liquid coating agent and the step of adhering the solid coating agent are preferably performed in parallel, and more preferably performed by contacting EVA with an aqueous solution in which the liquid coating agent is dissolved and in which the solid coating agent is dispersed. When contacting EVA with the aqueous solution in which the liquid coating agent is dissolved and in which the solid coating agent is dispersed, the amount of liquid coating agent and the amount of liquid coating agent adhered to the resin pellet can be adjusted respectively by adjusting the concentration of the liquid coating agent in the aqueous solution and the amount of the solid coating agent dispersed in the aqueous solution respectively.

The aqueous solution in which the liquid coating agent is dissolved and the solid coating agent is dispersed is preferably an emulsion. Examples of the method of forming the emulsion include a method in which water, the liquid coating agent and the solid coating agent are mixed, and the prepared liquid mixture is heated, stirred and the like as necessary.

Because the formation of the emulsion is easy, the liquid coating agent is preferably a block copolymer with an ethylene oxide chain and a propylene oxide chain and a propylene oxide chain, or a random copolymer with an ethylene oxide chain and a propylene oxide chain.

From the viewpoint of suitably forming the emulsion, the ratio (amount of solid coating agent/amount of liquid coating agent) of the amount of the solid coating agent with respect to the amount of the liquid coating agent in the liquid mixture is preferably from 0.5 to 70, more preferably from 1 to 30, and still more preferably from 2.5 to 10.

The use of the resin pellet of the present disclosure is not particularly limited and for example, the resin pellet is used as a modifier for gravure ink, a main agent or a modifier for a wire coating material, or the like.

### [Gravure ink]

Gravure ink of the present disclosure includes the aforementioned resin pellet of the present disclosure. The gravure ink may include a component included in general gravure ink other than the aforementioned resin pellet of the present disclosure, for example, may include a resin component other than the resin pellet, a solvent, colorant, another component, or the like.

Examples of the solvent include an aliphatic cyclic hydrocarbon solvent, a ketone solvent, an ester solvent, an alcohol solvent, a glycol ether solvent and the like. As the solvent, one kind may be used alone, or two or more kinds may be used in combination. The solvent preferably includes an ester solvent, and examples of the ester solvent include methyl acetate, ethyl acetate, normal propyl acetate, isopropyl acetate, and butyl acetate.

Examples of the colorant include pigments and dyes.

Examples of other components include antioxidants, lubricants, weathering agents, antiblocking agents, heat-resistant stabilizers, UV stabilizers, flame retardants, flame retardant aids, dispersants, antistatic agents, plasticizers, olefin waxes, and surfactants.

### [Wire coating material]

A wire coating material of the present disclosure includes the aforementioned resin pellet of the present disclosure. The wire coating material of the present disclosure is a material for protecting a surface of a wire that is a conductor.

From the viewpoint of improving insulation, flame retardancy, heat dissipation, and the like, the wire coating material includes a filler, a flame retardant, or the like. Because EVA included in the resin pellets of the present disclosure may include a relatively large amount of the constituent unit derived from vinyl acetate, or for example, the constituent unit that is more than 40% by mass and 70% by mass or less, many fillers can be added to the wire coating material. The wire coating material of the present disclosure may include a component included in a conventionally known wire coating material.

### Examples

Hereinafter, examples of the present disclosure will be described, but the present disclosure is not limited to the following examples.

In Examples and Comparative Examples, the following resin A, liquid coating agent B and solid coating agent C were used.

### <Resin A>

A-1: EVA (constituent unit derived from vinyl acetate; 46% by mass, MFR at 190°C and a load of 2160 g measured in accordance with JIS K7210: 1999; 100 g/10 min, pellet with width 2 mm and length 5 mm, number per 1g of pellet-shaped EVA; 50 number/g)
A-2: EVA (constituent unit derived from vinyl acetate; 60% by mass, MFR at 190°C and a load of 2160 g measured in accordance with JIS K7210: 1999; 2.75 g/10 min, pellet with width 5 mm and length 10 mm, number per 1g of pellet-shaped EVA; 4 number/g)

### <Resin B>

B-1: Pluronic (registered trademark) PE6400 (block copolymer of ethylene oxide chain and propylene oxide chain, content of ethylene oxide chain = 40% by mass, content of propylene oxide chain = 60% by mass, viscosity at 25°C; 1000 mPa·s, concentration of ethylene glycol; 40% by mass, manufactured by BASF)
B-2: Diglycerin (viscosity at 25°C; 10500 mPa s, manufactured by FUJIFILM Wako Pure Chemical Corporation)
B-3: KF-6020 (polyether modified silicone oil, manufactured by Shin-Etsu Chemical Co., Ltd.)

### <Solid coating agent C>

C-1: ELA (B) (average particle size 26 µm) obtained by ethanol-treating commercially available ELA (B) (erucic acid amide, manufactured by Nippon Fine Chemical Co., Ltd., average particle size 64 µm). The method of ethanol treatment is to dissolve commercially available ELA (B) in 98% ethanol and then dry it with dry air (23°C, 30 L/min) for 24 hours.
C-2: ELA (B) (average particle size 17 µm) that is an emulsion of ELA (B)
C-3: Slipax O (average particle size 18 µm) obtained by ethanol-treating commercially available Slipax O (ethylene bisoleic acid amide, manufactured by Mitsubishi Chemical Corporation).

### [Examples 1 to 5, 10 to 12]

A resin pellet in which the solid coating agent C-1 or C-3 was adhered on the surface of the resin A was prepared by the following procedures (1) to (4).
(1) Ion-exchanged water and the liquid coating agent B were mixed to prepare 50 mL of a liquid mixture.
(2) 130 g of the pellet-shaped resin A was prepared.
(3) With the prepared liquid mixture and the prepared pellet-shaped resin A in a polyethylene bag, the surface of the pellet-shaped resin A was coated with the liquid coating agent B. Then, the resin A coated with the liquid coating agent B was dried with dry air (23°C, 30 L/min) for about 24 hours.
(4) After drying, the solid coating agent C-1 or C-3 was added to the resin A coated with the liquid coating agent B, and the solid coating agent C-1 or C-3 was adhered on the surface of the resin A. The excess solid coating agent was removed to produce the resin pellet.

### [Examples 6 to 9]

A resin pellet in which the solid coating agent C-2 was adhered on the surface of the resin A was prepared by the following procedures (1)' to (4)'.
(1)' Ion-exchanged water, the liquid coating agent B-1, and the commercially available ELA (B), which is the solid coating agent, were mixed to prepare 500 mL of a liquid mixture.
(2)' The liquid mixture was hermetically sealed, heated and stirred with an autoclave (heating temperature; 150°C, stirring speed; 800 rpm, heating time; 5 hours). By the procedure of (1)'and (2)', the commercially available ELA (B) was emulsified to obtain the solid coating agent C-2.
(3)' 50 mL was taken out from the emulsion liquid obtained by the aforementioned treatment (2), the taken-out emulsion liquid and 130 g of the pellet-shaped resin A were put in a polyethylene bag, and then the solid coating agent C-2 was adhered on the surface of the pellet-shaped resin A via the liquid coating agent B-1.
(4)' After adhering the solid coating agent C-2, it was dried with dry air (23°C, 30 L/min) for about 24 hours. The excess solid coating agent was removed to produce the resin pellet.

### [Comparative Examples 1, 2]

The pellet-shaped resin A shown in Table 1 was used as resin pellets of Comparative Examples 1 and 2, respectively.

### [Comparative Example 3]

A resin pellet was obtained by adhering the solid coating agent C-1 to the pellet-shaped resin A in the same manner as Example 1 except that the liquid coating agent B was not used and the liquid coating agent B was not adhered to the surface of the resin A.

### <Blocking test>

130 g of the manufactured resin pellet was taken out, was put it in a polyethylene bag, the bag was put in a box of 88 mm in length × 105 mm in width × 50 mm in height, a load of 4.0 kg was applied to the entire resin pellet, and the resin pellet was kept in an oven at 40°C for 1 hour. Then, the resin pellet was taken out from the oven, and the blocking reducing effect was evaluated according to the following criteria.

### -Evaluation criteria-

A: There was almost no blocking, and the pellet was easily loosened in the polyethylene bag.
B: Although the resin pellet was slightly blocked, the pellet was loosened in the polyethylene bag.
C: The resin pellet was blocked and did not loosen in the polyethylene bag.

### <Total adhesion amount of solid coating agent>

80 mL of THF (tetrahydrofuran) was added to about 5 g of the resin pellet sample and a total amount of the sample was dissolved. 250 mL of methanol was added to the thus-obtained solution to precipitate the polymer component.

The polymer component was removed by filtration, and the thus-obtained filtrate was used to quantify the solid coating agent, which is an amide, by gas chromatography. From the result, the total adhesion amount of the solid coating agent with respect to 100 g of EVA was obtained.

### <Surface adhesion amount of solid coating agent>

(1) 100 mL of methanol was added to about 5 g of the resin pellet sample and shaken by hand for 30 seconds to dissolve the solid coating agent adhering to the surface of the resin pellet sample. However, a portion of the solid coating agent was undissolved. The polymer component was insoluble in methanol.
(2) The polymer component and the undissolved solid coating agent were removed by filtration, and the dissolved solid coating agent was quantified by gas chromatography using the thus-obtained filtrate.
(3) The polymer component was removed from the filter paper used for filtration, the filter paper was vacuum dried, weighed, and the amount of residue on the filter paper was quantified as the undissolved solid coating agent.
(4) The surface adhesion amount with respect to 100 g of EVA was obtained by adding up the values obtained in (2) and (3).

For Examples 1 to 12 and Comparative Examples 1 to 3, the ratio of each component is shown in Tables 1 and 2, and as a result of the blocking test, and results of the total adhesion amount (g) (referred to as (A)) of the solid coating agent with respect to 100 g of EVA, the surface adhesion amount (g) (referred to as (B)) of the solid coating agent with respect to 100 g of EVA, (B)/(A), resin pellet size (number/g) (referred to as (C)) and (A)/(C) are shown in Table 3.

In Tables 1 to 3, blanks mean that the corresponding component was not mixed.

**[Table 1]**

| | Resin A [part by mass] | | Concentration of liquid coating agent B [% by mass] | | | Addition amount of solid coating agent C with respect to resin A [part by mass] | | |
|---|---|---|---|---|---|---|---|---|
| | A-1 | A-2 | B-1 | B-2 | B-3 | C-1 | C-2 | C-3 |
| Example 1 | 100 | | 0.5 | | | 6 | | |
| Example 2 | 100 | | 1 | | | 2 | | |
| Example 3 | 100 | | 1 | | | 4 | | |
| Example 4 | 100 | | 1 | | | 6 | | |
| Example 5 | 100 | | 1 | | | | | 6 |
| Example 10 | 100 | | | 1 | | 6 | | |
| Example 11 | 100 | | | | 0.1 | 6 | | |
| Example 12 | | 100 | 1 | | | 6 | | |
| Comparative Example 1 | 100 | | | | | | | |
| Comparative Example 2 | | 100 | | | | | | |
| Comparative Example 3 | 100 | | | | | 6 | | |

**[Table 2]**

| | Resin A [part by mass] | | Concentration of liquid coating agent B [% by mass] | | | Concentration of solid coating agent C [% by mass] | | |
|---|---|---|---|---|---|---|---|---|
| | A-1 | A-2 | B-1 | B-2 | B-3 | C-1 | C-2 | C-3 |
| Example 6 | 100 | | 2 | | | | 5 | |
| Example 7 | 100 | | 2 | | | | 7.5 | |
| Example 8 | 100 | | 2 | | | | 10 | |
| Example 9 | 100 | | 2 | | | | 20 | |

**[Table 3]**

| | Blocking test (40°C) | Total adhesion amount of solid coating agent [g] with respect to per 100 g of EVA•• •(A) | Surface adhesion amount of solid coating agent [g] with respect to per 100 g of EVA•• •(B) | Surface adhesion ratio (B)/(A) | Resin pellet size number/g• ••(C) | (A)/(C) |
|---|---|---|---|---|---|---|
| Example 1 | A | 3.0 | 3.0 | 1.00 | 50 | 0.060 |
| Example 2 | B | 1.0 | 1.0 | 1.00 | 50 | 0.020 |
| Example 3 | B | 1.8 | 1.8 | 1.00 | 50 | 0.036 |
| Example 4 | A | 2.8 | 2.6 | 0.93 | 50 | 0.056 |
| Example 5 | A | 1.9 | 1.8 | 0.95 | 50 | 0.038 |
| Example 6 | B | 1.3 | 1.1 | 0.85 | 50 | 0.026 |
| Example 7 | A | 2.5 | 2.3 | 0.92 | 50 | 0.050 |
| Example 8 | A | 3.3 | 3.0 | 0.91 | 50 | 0.066 |
| Example 9 | A | 11.3 | 10.9 | 0.96 | 50 | 0.226 |
| Example 10 | A | 2.4 | 2.4 | 1.00 | 50 | 0.048 |
| Example 11 | A | 2.9 | 2.9 | 1.00 | 50 | 0.058 |
| Example 12 | A | 1.2 | 1.1 | 0.92 | 4 | 0.300 |
| Comparative Example 1 | C | | | | 50 | 0.000 |
| Comparative Example 2 | C | | | | 4 | 0.000 |
| Comparative Example 3 | C | 0.7 | 0.7 | 1.00 | 50 | 0.014 |

As shown in Table 3, the resin pellets of Examples 1 to 12 were excellent in the blocking reducing effect compared with the resin pellets of Comparative Examples 1 to 3.

## Claims

1. A resin pellet, comprising:
a pellet-shaped ethylene-vinyl acetate copolymer;
a liquid coating agent; and
a solid coating agent adhered to at least a portion of surfaces of the ethylene-vinyl acetate copolymer and of the liquid coating agent,
wherein the liquid coating agent is a compound including a hydroxyl group, and the liquid coating agent includes at least one liquid coating agent selected from the group consisting of a polyalkylene oxide, a block copolymer with an ethylene oxide chain and a propylene oxide chain, a random copolymer with an ethylene oxide chain and a propylene oxide chain, glycerin, diglycerin, and a silicone oil, and
wherein the solid coating agent is an organic compound including an amide of a saturated fatty acid or an unsaturated fatty acid.

2. The resin pellet according to claim 1, wherein a total adhesion amount of the solid coating agent is 1.0 parts by mass or more with respect to 100 parts by mass of the ethylene-vinyl acetate copolymer.

3. The resin pellet according to any one of claim 1 or 2, wherein a number obtained by dividing a surface adhesion amount, in parts by mass, of the solid coating agent with respect to 100 parts by mass of the ethylene-vinyl acetate copolymer by a total adhesion amount, in parts by mass, of the solid coating agent with respect to 100 parts by mass of the ethylene-vinyl acetate copolymer is from 0.80 to 1.00.

4. The resin pellet according to any one of claims 1 to 3, wherein the solid coating agent is adhered to at least a portion of the surface of the ethylene-vinyl acetate copolymer via the liquid coating agent.

5. The resin pellet according to any one of claims 1 to 4, wherein a number obtained by dividing a total adhesion amount, in parts by mass, of the solid coating agent with respect to 100 parts by mass of the ethylene-vinyl acetate copolymer by a number, number/g, of the ethylene-vinyl acetate copolymer per 1 g of the ethylene-vinyl acetate copolymer is 0.037 or more.

6. The resin pellet according to any one of claims 1 to 5, wherein a content of a constituent unit derived from vinyl acetate in the ethylene-vinyl acetate copolymer, is from more than 40% by mass to 70% by mass.

7. The resin pellet according to any one of claims 1 to 6, wherein the organic compound includes an unsaturated fatty acid amide.

8. The resin pellet according to any one of claims 1 to 7, wherein the organic compound includes an unsaturated fatty acid monoamide.

9. The resin pellet according to any one of claims 1 to 8, wherein the liquid coating agent includes at least one selected from the group consisting of a block copolymer with an ethylene oxide chain and a propylene oxide chain, a random copolymer with an ethylene oxide chain and a propylene oxide chain, and diglycerin.

10. A method of manufacturing the resin pellet according to any one of claims 1 to 9, the method comprising:
adhering the liquid coating agent to at least a portion of the surface of the ethylene-vinyl acetate copolymer, and
adhering the solid coating agent to at least a portion of the surface of the ethylene-vinyl acetate copolymer.

11. The method of manufacturing the resin pellet according to claim 10, wherein the adhering of the liquid coating agent and the adhering of the solid coating agent are performed by contacting the ethylene-vinyl acetate copolymer with an aqueous solution in which the liquid coating agent is dissolved and in which the solid coating agent is dispersed.

12. The method of manufacturing the resin pellet according to claim 11, wherein the aqueous solution in which the liquid coating agent is dissolved and in which the solid coating agent is dispersed is an emulsion.

13. A gravure ink, including the resin pellet according to any one of claims 1 to 9.

14. A wire coating material, including the resin pellet according to any one of claims 1 to 9.

## Patentansprüche

1. Harzpellet, umfassend:
ein pelletförmiges Ethylen-Vinylacetat-Copolymer;
ein flüssiges Beschichtungsmittel; und
ein festes Beschichtungsmittel, angehaftet an zumindest einem Abschnitt der Oberflächen des Ethylen-Vinylacetat-Copolymers und des flüssigen Beschichtungsmittels,
wobei das flüssige Beschichtungsmittel eine Verbindung mit einer Hydroxylgruppe ist, und das flüssige Beschichtungsmittel mindestens ein flüssiges Beschichtungsmittel, ausgewählt aus der Gruppe bestehend aus einem Polyalkylenoxid, einem Blockcopolymer mit einer Ethylenoxidkette und einer Propylenoxidkette, einem statististischen Copolymer mit einer Ethylenoxidkette und einer Propylenoxidkette, Glycerin, Diglycerin und einem Silikonöl, umfasst, und
wobei das feste Beschichtungsmittel eine organische Verbindung, umfassend ein Amid einer gesättigten Fettsäure oder einer ungesättigten Fettsäure, ist.

2. Harzpellet nach Anspruch 1, wobei eine Gesamthaftungsmenge des festen Beschichtungsmittels 1,0 Masseteile oder mehr in Bezug auf 100 Masseteile des Ethylen-Vinylacetat-Copolymers beträgt.

3. Harzpellet nach einem von Anspruch 1 oder 2, wobei eine Zahl, erhalten durch Dividieren einer Oberflächenanhaftungsmenge, in Masseteilen, des festen Beschichtungsmittels, in Bezug auf 100 Masseteile des Ethylen-Vinylacetat-Copolymers, durch eine Gesamthaftungsmenge, in Masseteilen, des festen Beschichtungsmittels, in Bezug auf 100 Masseteile des Ethylen-Vinylacetat-Copolymers, von 0,80 bis 1,00 beträgt.

4. Harzpellet nach einem der Ansprüche 1 bis 3, wobei das feste Beschichtungsmittel an zumindest einem Abschnitt der Oberfläche des Ethylen-Vinylacetat-Copolymers über das flüssige Beschichtungsmittel angehaftet ist.

5. Harzpellet nach einem der Ansprüche 1 bis 4, wobei eine Zahl, erhalten durch Dividieren einer Gesamthaftungsmenge, in Masseteilen, des festen Beschichtungsmittels, in Bezug auf 100 Masseteile des Ethylen-Vinylacetat-Copolymers, durch eine Anzahl, Anzahl/g, des Ethylen-Vinylacetat-Copolymers pro 1 g des Ethylen-Vinylacetat-Copolymers, 0,037 oder mehr beträgt.

6. Harzpellet nach einem der Ansprüche 1 bis 5, wobei ein Anteil einer von Vinylacetat abgeleiteten Grundeinheit in dem Ethylen-Vinylacetat-Copolymer von mehr als 40 Masse-% bis 70 Masse-% beträgt.

7. Harzpellet nach einem der Ansprüche 1 bis 6, wobei die organische Verbindung ein Amid einer ungesättigten Fettsäure umfasst.

8. Harzpellet nach einem der Ansprüche 1 bis 7, wobei die organische Verbindung ein Monoamid einer ungesättigten Fettsäure umfasst.

9. Harzpellet nach einem der Ansprüche 1 bis 8, wobei das flüssige Beschichtungsmittel mindestens eines, ausgewählt aus der Gruppe bestehend aus einem Blockcopolymer mit einer Ethylenoxidkette und einer Propylenoxidkette, einem statististischen Copolymer mit einer Ethylenoxidkette und einer Propylenoxidkette und Diglycerin, umfasst.

10. Verfahren zur Herstellung des Harzpellets nach einem der Ansprüche 1 bis 9, wobei das Verfahren umfasst:
Anhaften des flüssigen Beschichtungsmittels an zumindest einem Abschnitt der Oberfläche des Ethylen-Vinylacetat-Copolymers, und
Anhaften des festen Beschichtungsmittels an zumindest einem Abschnitt der Oberfläche des Ethylen-Vinylacetat-Copolymers.

11. Verfahren zur Herstellung des Harzpellets nach Anspruch 10, wobei das Anhaften des flüssigen Beschichtungsmittels und das Anhaften des festen Beschichtungsmittels durch Inkontaktbringen des Ethylen-Vinylacetat-Copolymers mit einer wässrigen Lösung, in der das flüssige Beschichtungsmittel gelöst ist und in der das feste Beschichtungsmittel dispergiert ist, vollzogen werden.

12. Verfahren zur Herstellung des Harzpellets nach Anspruch 11, wobei die wässrige Lösung, in der das flüssige Beschichtungsmittel gelöst ist und in der das feste Beschichtungsmittel dispergiert ist, eine Emulsion ist.

13. Tiefdruckfarbe, umfassend das Harzpellet nach einem der Ansprüche 1 bis 9.

14. Drahtbeschichtungsmaterial, umfassend das Harzpellet nach einem der Ansprüche 1 bis 9.

## Revendications

1. Pastille de résine, comprenant :
un copolymère d'éthylène-acétate de vinyle en forme de pastille ;
un agent de revêtement liquide ; et
un agent de revêtement solide adhérant à au moins une portion des surfaces du copolymère d'éthylène-acétate de vinyle et de l'agent de revêtement liquide,
dans laquelle l'agent de revêtement liquide est un composé incluant un groupe hydroxyle, et l'agent de revêtement liquide inclut au moins un agent de revêtement liquide choisi dans le groupe constitué d'un oxyde de polyalkylène, d'un copolymère séquencé avec une chaîne d'oxyde d'éthylène et une chaîne d'oxyde de propylène, d'un copolymère aléatoire avec une chaîne d'oxyde d'éthylène et une chaîne d'oxyde de propylène, de la glycérine, de la diglycérine, et d'une huile de silicone, et
dans laquelle l'agent de revêtement solide est un composé organique incluant un amide d'un acide gras saturé ou d'un acide gras insaturé.

2. Pastille de résine selon la revendication 1, dans laquelle une quantité d'adhésion totale de l'agent de revêtement solide est de 1,0 partie en masse ou plus par rapport à 100 parties en masse du copolymère d'éthylène-acétate de vinyle.

3. Pastille de résine selon l'une quelconque des revendications 1 ou 2, dans laquelle un nombre obtenu en divisant une quantité d'adhésion de surface, en parties en masse, de l'agent de revêtement solide par rapport à 100 parties en masse du copolymère d'éthylène-acétate de vinyle par une quantité d'adhésion totale, en parties en masse, de l'agent de revêtement solide par rapport à 100 parties en masse du copolymère d'éthylène-acétate de vinyle est de 0,80 à 1,00.

4. Pastille de résine selon l'une quelconque des revendications 1 à 3, dans laquelle l'agent de revêtement solide adhère à au moins une portion de la surface du copolymère d'éthylène-acétate de vinyle par l'intermédiaire de l'agent de revêtement liquide.

5. Pastille de résine selon l'une quelconque des revendications 1 à 4, dans laquelle un nombre obtenu en divisant une quantité d'adhésion totale, en parties en masse, de l'agent de revêtement solide par rapport à 100 parties en masse du copolymère d'éthylène-acétate de vinyle par un nombre, nombre/g, du copolymère d'éthylène-acétate de vinyle pour 1 g du copolymère d'éthylène-acétate de vinyle est de 0,037 ou plus.

6. Pastille de résine selon l'une quelconque des revendications 1 à 5, dans laquelle une teneur en unité constitutive dérivée d'acétate de vinyle dans le copolymère d'éthylène-acétate de vinyle est de plus de 40 % en masse à 70 % en masse.

7. Pastille de résine selon l'une quelconque des revendications 1 à 6, dans laquelle le composé organique inclut un amide d'acide gras insaturé.

8. Pastille de résine selon l'une quelconque des revendications 1 à 7, dans laquelle le composé organique inclut un monoamide d'acide gras insaturé.

9. Pastille de résine selon l'une quelconque des revendications 1 à 8, dans laquelle l'agent de revêtement liquide inclut au moins un élément choisi dans le groupe constitué d'un copolymère séquencé avec une chaîne d'oxyde d'éthylène et une chaîne d'oxyde de propylène, d'un copolymère aléatoire avec une chaîne d'oxyde d'éthylène et une chaîne d'oxyde de propylène, et de la diglycérine.

10. Procédé de fabrication de la pastille de résine selon l'une quelconque des revendications 1 à 9, le procédé comprenant les étapes consistant à :
faire adhérer l'agent de revêtement liquide à au moins une portion de la surface du copolymère d'éthylène-acétate de vinyle, et
faire adhérer l'agent de revêtement solide à au moins une portion de la surface du copolymère d'éthylène-acétate de vinyle.

11. Procédé de fabrication de la pastille de résine selon la revendication 10, dans lequel l'adhésion de l'agent de revêtement liquide et l'adhésion de l'agent de revêtement solide sont réalisées en mettant en contact le copolymère d'éthylène-acétate de vinyle avec une solution aqueuse dans laquelle l'agent de revêtement liquide est dissous et dans laquelle l'agent de revêtement solide est dispersé.

12. Procédé de fabrication de la pastille de résine selon la revendication 11, dans lequel la solution aqueuse dans laquelle l'agent de revêtement liquide est dissous et dans laquelle l'agent de revêtement solide est dispersé est une émulsion.

13. Encre d'héliogravure, incluant la pastille de résine selon l'une quelconque des revendications 1 à 9.

14. Matériau de revêtement de fil, incluant la pastille de résine selon l'une quelconque des revendications 1 à 9.
